# FASCICULE DE BREVET EUROPEEN

(11) **EP 3 728 410 B1**
(45) Date de publication et mention de la délivrance du brevet: **06.10.2021**
(21) Numéro de dépôt: 18811275.9
(22) Date de dépôt: 04.12.2018
(51) Int. Cl.: C08H 8/00

(54) **PROCEDE DE TRAITEMENT DE BIOMASSE LIGNO-CELLULOSIQUE**
VERFAHREN ZUR BEHANDLUNG VON LIGNOCELLULOSE-BIOMASSE
LIGNOCELLULOSIC BIOMASS TREATMENT METHOD

(30) Priorité: 20.12.2017 FR 1762609
(43) Date de publication de la demande: 28.10.2020
(73) Titulaire: IFP Energies nouvelles, 92852 Rueil-Malmaison (FR); Institut national de recherche pour l'agriculture, l'alimentation et l'environnement, 75338 Paris Cedex 07 (FR); Agro Industries Recherche Et Developpement, 51110 Pomacle (FR)
(72) Inventeur: AYMARD, Caroline, 69007 LYON (FR); BOUILLON, Pierre-Antoine, 69003 LYON (FR); BOURAS GALINIE, Meriem, 69110 STE FOY LES LYON (FR)
(74) Mandataire: IFP Energies nouvelles
(86) Numéro de dépôt international: PCT/EP2018/083542
(87) Numéro de publication internationale: WO 2019/120996

(56) Documents cités:
- WO-A1-2010/121367
- WO-A1-2012/061939
- WO-A1-2012/088108
- WO-A1-2015/100444
- WO-A1-2015/173226
- WO-A1-2018/015227

## Description

### Domaine de l'invention

L'invention concerne un procédé de traitement de biomasse lignocellulosique pour produire des jus sucrés dits de seconde génération (2G). Ces jus sucrés peuvent être utilisés pour produire d'autres produits par voie biochimique (ex : des alcools comme l'éthanol, le butanol ou d'autres molécules, par exemple des solvants tels que l'acétone etc...). Ce procédé comporte généralement trois étapes qui sont la préparation de liqueur, l'imprégnation de la biomasse et le prétraitement de la biomasse imprégnée, par exemple par cuisson éventuellement couplée à explosion à la vapeur.

### Art antérieur

La biomasse lignocellulosique représente une des ressources renouvelables les plus abondantes sur terre. Les substrats considérés sont très variés, ils concernent à la fois des substrats ligneux comme différents bois (feuillus et résineux), des coproduits issus de l'agriculture (pailles de blé, rafles de maïs, etc...) ou d'autres industries agroalimentaires, papetières, etc...

Le procédé de transformation biochimique de la lignocellulosique en jus sucrés 2G comprend notamment une étape de prétraitement et une étape d'hydrolyse enzymatique par un cocktail enzymatique. Ces procédés comportent aussi le plus souvent une étape d'imprégnation avant le prétraitement. Les jus sucrés issus de l'hydrolyse sont ensuite traités, par exemple par fermentation, et le procédé comprend également des étapes de séparation et/ou une étape de purification du produit final.

La biomasse lignocellulosique est composée de trois principaux polymères : la cellulose (35 à 50%), qui est un polysaccharide essentiellement constitué d'hexoses ; l'hémicellulose (20 à 30%), qui est un polysaccharide essentiellement constitué de pentoses ; et la lignine (15 à 25%), qui est un polymère de structure complexe et de haut poids moléculaire, composé d'alcools aromatiques reliés par des liaisons éther. Ces différentes molécules sont responsables des propriétés intrinsèques de la paroi végétale et s'organisent en un enchevêtrement complexe.

Parmi les trois polymères de base qui intègrent la biomasse lignocellulosique, la cellulose et l'hémicellulose sont ceux qui permettent la production de jus sucrés 2G.

Le plus souvent, l'hémicellulose est majoritairement décomposée en sucre durant le prétraitement et la cellulose est convertie en glucose par l'hydrolyse enzymatique. Toutefois, l'accès à la cellulose brute reste difficilement accessibles aux enzymes d'où la nécessité d'un prétraitement. Ce prétraitement permet de modifier les propriétés physico-chimiques de la lignocellulosique afin d'améliorer l'accessibilité de la cellulose aux enzymes et sa réactivité à l'hydrolyse enzymatique.

De nombreuses technologies intéressant l'invention pour réaliser ce prétraitement existent, qui seront ci-après regroupés sous le terme générique de « cuisson » : cuissons acides, cuissons alcalines, explosion à la vapeur, procédés dits « organosolv pulping » selon le terme anglais connu (ou traitement avec organo-solvent en français). Ce dernier procédé concerne un prétraitement en présence d'un ou plusieurs solvants organiques et généralement d'eau. Le solvant peut être un alcool (éthanol), un acide type acide acétique, acide formique, ou encore l'acétone. Les procédés « organosolv pulping » conduisent à une solubilisation au moins partielle de la lignine, une solubilisation partielle des hémicelluloses. On a alors deux flux en sortie : le substrat prétraité avec cellulose, hémicellulose et lignine résiduels et la phase solvant qui contient la ligne solubilisée et une partie des hémicellulose. Il y a généralement une étape de régénération du solvant qui permet d'extraire un flux de lignine. Certains traitements « organosolv pulping » (notamment avec de l'éthanol) sont couplés avec l'ajout d'un acide fort (du type H₂SO₄). On peut envisager également d'avoir une mise en contact de la biomasse avec le solvant via un réacteur d'imprégnation avant la phase de cuisson ou d'avoir une mise en contact de la biomasse avec le catalyseur acide avant d'effectuer une cuisson « organosolv pulping ».

Différentes configurations sont reportées par exemple dans le document «Production of bioethanol from lignocellulosic materials via the biochemical pathway: A review », M. Balat, Energy Conversion and Management 52 (2011) 858-875, ou encore dans le document « Bioethanol production from agricultural wastes : an overview », N. Sarkar, S. Kumar Ghosh, S. Bannerjee, K. Aikat, Renewable Energy 37 (2012) 19-27.

Un des prétraitements le plus efficace est l'explosion à la vapeur en condition acide, qui permet une hydrolyse presque totale de l'hémicellulose et une amélioration importante de l'accessibilité et la réactivité de la cellulose aux enzymes. Ce prétraitement peut être précédé d'autre(s) traitement(s).

Tous ces prétraitements s'appliquent sur des biomasses qui sont initialement sous forme solide, c'est le but du prétraitement de les déstructurer.

Un des prétraitements le plus efficace est l'explosion à la vapeur qui permet une hydrolyse presque totale de l'hémicellulose et une amélioration importante de l'accessibilité et la réactivité de la cellulose aux enzymes. Ce prétraitement peut être précédé d'autre(s) traitement(s).

Les brevets US-8057639 et US-8512512 proposent un procédé comprenant une première étape d'hydrolyse de l'hémicellulose en sucres C5 dans des conditions douces les préservant ainsi de leur dégradation. Cette étape est réalisée dans un premier réacteur sous une pression de 1.5 bar ou plus par injection de vapeur, à une température de 110°C ou plus, et éventuellement en présence d'acide faible. Après cette étape, un lavage est réalisé pour extraire et récupérer les jus de sucres C5 avant d'envoyer la biomasse restante, enrichie en cellulose et lignine, dans une seconde étape (second réacteur) où a lieu l'explosion à la vapeur. Ce second réacteur opère à une pression plus élevée que le premier réacteur avec une injection de vapeur à pression élevée qui provoque une détente brutale de la biomasse (explosion à la vapeur).

La demande de brevet WO-2013/141776 décrit, dans le domaine papetier, un procédé d'imprégnation dans un réacteur (imprégnateur) vertical contenant de la liqueur basique d'imprégnation, définissant ainsi une première zone dans laquelle l'imprégnation est effectuée. La matière lignocellulosique est reçue en bas de l'imprégnateur, elle est transférée vers le haut de l'imprégnateur au moyen de deux vis de transfert. Lors de son transfert dans la seconde zone de l'imprégnateur située au-dessus du niveau du liquide, la biomasse s'égoutte et le liquide retombe dans la première zone. Dans cette configuration, le niveau de liquide est contrôlé par l'apport de liqueur basique.

Dès lors qu'un traitement requiert une étape en pression (imprégnation, prétraitement du type cuisson ou autre), il est nécessaire de faire appel à des moyens d'introduction de biomasse solide compatibles avec ces étapes de pression. C'est par exemple le cas des vis de compression, dont un mode de réalisation est décrit dans la demande de brevet CA 2 77322.

L'invention a alors pour but d'améliorer le traitement de biomasse lignocellulosique. Elle a notamment pour but d'améliorer l'introduction de la biomasse dans un réacteur opérant une ou plusieurs des étapes du traitement de la biomasse.

Elle a plus particulièrement pour but d'améliorer les étapes d'imprégnation et d'explosion à la vapeur de la biomasse telles que décrites dans les documents antérieurs précités. L'invention a aussi pour but de rendre le procédé de traitement, et notamment ces deux étapes, plus performantes, en termes de consommation d'énergie et/ou de fluide de traitement.

Dans tout le présent texte, l'acronyme "MS" désigne le taux de matière sèche qui est mesurée selon la norme ASTM E1756 - 08(2015) « Standard Test Method for Détermination of Total Solids in Biomass".

### Résumé de l'invention

L'invention a tout d'abord pour objet un procédé de traitement d'une biomasse lignocellulosique ou d'un substrat lignocellulosique comprenant un taux de matière sèche MS d'au plus 90% en poids, ledit procédé comprenant la mise en œuvre d'au moins un réacteur de traitement de ladite biomasse, où l'on alimente en biomasse le ou au moins un desdits réacteurs par un moyen d'alimentation créant une augmentation de pression entre l'entrée de biomasse et la sortie de biomasse dudit moyen d'alimentation, et où on lave ledit moyen d'alimentation par circulation d'un fluide de lavage entre une entrée de lavage et une sortie de lavage.

Selon l'invention, on réintroduit une partie au moins du fluide de lavage sortant de la sortie de fluide du ou d'au moins un des moyens d'alimentation dans l'entrée de lavage du même moyen d'alimentation ou d'un autre desdits moyens d'alimentation.

Selon l'invention, on comprend par « biomasse lignocellulosique comprenant un taux de matière sèche de X % » : soit une biomasse qui comprend naturellement un taux de X % de matière sèche (une biomasse dite native), soit une biomasse qui présente ce taux après une ou plusieurs opérations préalables au procédé selon l'invention.

Il s'est en effet avéré très avantageux de « recycler » ainsi tout ou partie de l'eau de lavage du moyen d'alimentation, qui peut par exemple être une vis d'alimentation : à tout le moins, quand la biomasse ne contient pas de catalyseur, on réalise une économie en consommation de fluide (eau) de lavage. On peut aussi réaliser une économie en énergie, quand cette eau de lavage doit être chauffée avant introduction dans le circuit de lavage, car on réinjecte alors dans le circuit de lavage un fluide « usé » qui a déjà une température au-dessus de l'ambiante. Et quand il s'agit du lavage d'un moyen d'alimentation en biomasse additionnée d'un catalyseur (par exemple après une opération d'imprégnation par une liqueur catalytique utilisant un catalyseur acide, basique ou oxydant), il s'est avéré que l'eau de lavage en sortie du moyen d'alimentation pouvait contenir une certaine teneur en catalyseur (quand la biomasse subit une extraction liquide en traversant le moyen d'alimentation), mais que cette présence d'eau de lavage « usée » contenant en outre un catalyseur en entrée du circuit de lavage ne posait aucun problème.

A noter que la mise en œuvre de l'invention est simple : l'installation a juste à prévoir une ou des conduites supplémentaires assurant la connexion fluidique directe entre la sortie de lavage et l'entrée de lavage du même moyen d'alimentation ou entre la sortie de lavage d'un moyen d'alimentation avec l'entrée d'un autre moyen.

On peut aussi, selon l'invention, conserver la possibilité de purger la partie éventuelle d'eau de lavage en sortie qui n'est pas recyclée.

La biomasse lignocellulosique traitée selon l'invention a le taux de matière sèche MS compris entre 5% et 80 en poids. De préférence, elle contient au plus 75%, notamment au plus 70 ou 65% en poids, et notamment moins de 50% en poids de matière sèche.

La biomasse traitée selon l'invention présente donc de préférence un certain taux d'humidité avant introduction dans le moyen d'alimentation. Cette eau peut être naturellement présente, comme c'est le cas par exemple pour une biomasse sous forme de plaquettes de bois. Elle peut aussi être naturellement en faible ou très faible quantité, comme cela peut être le cas de la paille de blé ou de maïs. Si le taux d'humidité est trop faible, la biomasse peut être préalablement humidifiée pour atteindre le taux de matière sèche d'au plus 90 ou 80% souhaitable à la mise en œuvre de l'invention. Le moyen d'alimentation selon l'invention met sous compression la biomasse, son but étant généralement d'introduire la biomasse dans une zone (un réacteur) à plus haute pression. Cette compression, de cette augmentation de pression dans le moyen d'alimentation peut entraîner une extraction, une expulsion d'une partie au moins du liquide contenu dans la biomasse, qui vient éventuellement se mêler au fluide de lavage en sortie de fluide du moyen d'alimentation. Une extraction optionnelle d'une partie au moins du liquide contenue dans la biomasse lors de son passage dans le ou un des moyens d'alimentation peut donc être réalisée, qui est une conséquence du choix du moyen d'alimentation en biomasse.

Ainsi, si le taux de matière sèche de la biomasse est élevé, plutôt dans les valeurs élevées de la gamme mentionnée plus haut (par exemple de l'ordre de 70 ou 75% à 90%), on n'aura pas ou peu d'extraction de fluide de cette biomasse hors du moyen d'alimentation via la sortie de fluide de lavage, et l'invention permet surtout de recycler le fluide de lavage injecté dans le moyen d'alimentation.

Et si le taux de matière sèche est plus faible, plutôt dans les valeurs les plus faibles de la gamme mentionnée plus haut (par exemple en dessous de 70%, 65% ou même en dessous de 50%) , alors on aura une certaine extraction de fluide de la biomasse, et l'invention permet alors de diminuer encore plus l'apport en fluide de lavage, voire même de le supprimer, le lavage pouvant alors se faire en tout ou partie avec le fluide extrait de la biomasse.

De préférence, le taux de matière sèche MS du substrat lignocellulosique en sortie du moyen d'alimentation est alors supérieur ou égal à 20% en poids, et préférentiellement supérieur ou égal à 40% en poids.

De préférence, l'augmentation de pression créée dans le ou au moins un des moyens d'alimentation est d'au moins 0,05 MPa, et est notamment comprise entre 0,05 et 4 MPa, par exemple entre 0,1 et 2,5 MPa.

Ce ou ces moyens d'alimentation sont par exemple sous forme de vis d'alimentation, notamment au moins en partie coniques, comprenant un carénage muni d'une grille permettant la circulation du fluide de lavage. La forme conique de la partie terminale généralement, de ce type de vis va donc comprimer la biomasse, créant une différence de pression. Ce type de moyen d'alimentation présente un avantage important : la vis permet de former un bouchon hermétique de biomasse qui assure l'étanchéité et empêche notamment les remontées de liquide depuis le réacteur dans lequel elle débouche.

Un exemple de ce type de vis est décrit dans le document CA 2 77322 précité.

L'invention peut donc s'appliquer à tout traitement de la biomasse dans un réacteur utilisant un moyen d'alimentation en pression de la biomasse, et notamment tout traitement à une pression supérieure à la pression atmosphérique ou supérieure à la pression à laquelle se trouve la biomasse avant introduction dans ledit réacteur.

Selon un mode de réalisation, le procédé de l'invention comprend une étape d'imprégnation de la biomasse par une liqueur d'imprégnation contenant un catalyseur chimique Cette étape peut être suivie (directement ou en prévoyant une ou des étapes intermédiaires) d'une étape de cuisson, cette étape de cuisson étant mise en œuvre par le/ un des réacteurs muni du moyen d'alimentation.

Selon un mode de réalisation, le procédé de l'invention comprend une étape d'imprégnation de la biomasse par une liqueur d'imprégnation contenant un catalyseur chimique par traversée de la biomasse dans un lit de liqueur ou par aspersion par la liqueur de la biomasse sur un convoyeur de type tapis ou par passage de la biomasse dans un réacteur agité.

Selon un autre mode de réalisation, le procédé de l'invention comprend une étape d'imprégnation de la biomasse par une liqueur d'imprégnation contenant un catalyseur chimique, par introduction dans un réacteur par ledit ou au moins un desdits moyens d'alimentation.

Selon un mode de réalisation, le procédé de l'invention comprend une étape de traitement de la biomasse par cuisson, notamment dans le ou un des réacteurs muni d'un moyen d'alimentation.

Un exemple de réalisation du procédé de l'invention est le suivant : il s'agit de traiter une biomasse lignocellulosique, ledit procédé comprenant les étapes suivantes :
a. Préparation d'une liqueur d'imprégnation contenant un catalyseur chimique destinée à l'imprégnation de la biomasse, choisi parmi un catalyseur acide, un catalyseur basique et un catalyseur oxydant, et de préférence un catalyseur acide, dans une zone de préparation
b. Introduction de la biomasse broyée par une entrée d'un réacteur d'imprégnation à l'aide d'un premier moyen d'alimentation, ledit premier moyen d'alimentation étant lavé par circulation d'un premier fluide de lavage entre une entrée et une sortie dudit moyen.
c. Introduction de la liqueur dans le réacteur d'imprégnation par une première entrée de liqueur du réacteur,
d. Transfert de la biomasse imprégnée et égouttée depuis une sortie du réacteur d'imprégnation vers une entrée d'un réacteur de prétraitement par cuisson, l'introduction dans ledit réacteur de prétraitement se faisant par un deuxième moyen d'alimentation, ledit deuxième moyen d'alimentation étant lavé par circulation d'un deuxième fluide de lavage entre une entrée et une sortie dudit moyen d'alimentation
e. Prétraitement de ladite biomasse dans ledit réacteur par cuisson

Et le procédé comprend également l'étape (ou les étapes) suivantes:
f. Réintroduction d'une partie au moins du premier et/ou du deuxième fluide de lavage sortant de la sortie de fluide dudit premier ou dudit deuxième moyen d'alimentation dans l'entrée de lavage du premier moyen d'alimentation et/ou du deuxième moyen d'alimentation.

De préférence, l'imprégnation et le prétraitement par cuisson à la vapeur se font en continu. Mais l'invention s'applique également à un procédé où ces deux étapes sont discontinues, par « batch ». De préférence, la cuisson est suivie par une explosition à la vapeur, mais cette étape d'explosion reste optionnelle.

De préférence, l'imprégnation dans ce mode de réalisation peut se faire dans un réacteur dont l'entrée en biomasse est située dans une première zone d'imprégnation dudit réacteur d'imprégnation qui comprend deux zones superposées, ladite première zone d'imprégnation et une deuxième zone dite d'égouttage qui est au-dessus de la zone d'imprégnation et qui est équipée d'une sortie de biomasse imprégnée et égouttée. De préférence encore dans cette configuration de réacteur, l'introduction de la liqueur dans ledit réacteur se fait par une première entrée de liqueur du réacteur qui est située dans ladite première zone d'imprégnation du réacteur.

L'invention propose donc dans cet exemple de recycler, de réutiliser tout ou partie des fluides de lavage des deux vis d'alimentation. Ce qui est particulièrement avantageux, c'est qu'il s'est avéré qu'on pouvait effectivement recycler l'une et/ou l'autre des fluides de lavage, ou les deux, sans que la qualité de l'imprégnation ou celle de la cuisson en soit affectée en aucune manière.

Et ce recyclage peut se faire de différentes façons, de façon très flexible, et ceci pour chacun des fluides de lavage :
Ainsi, le fluide de lavage du moyen d'alimentation du réacteur d'imprégnation est généralement à base d'eau, et en sortie du moyen d'alimentation, on récupère donc majoritairement de l'eau dite « usée ». Recycler cette eau usée en la réintroduisant dans l'entrée de l'une ou l'autre des moyens d'alimentation des vis permet une diminution significative de la consommation en eau du procédé. Quand, en outre, cette eau est chauffée, on observe également un gain en énergie puisque l'eau de lavage nécessite alors globalement un chauffage moindre. Une circulation de fluide de lavage en boucle fermée est dons très avantageuse.

En ce qui concerne le fluide de lavage du moyen d'alimentation du réacteur de prétraitement par cuisson, la situation est un peu différente, puisque le fluide de lavage, généralement de l'eau également, va avoir tendance à se charger en catalyseur en lavant le moyen d'alimentation qui transporte la biomasse déjà imprégnée par la liqueur catalytique : dans cette vis s'opère une expulsion d'une partie du liquide de la biomasse imprégnée contenant le catalyseur, et ce liquide vient se mêler, en sortie de la vis, avec l'eau de lavage de celle-ci En sortie de ce moyen d'alimentation, on parle alors usuellement de « pressât ». Ce pressât peut aussi être recyclé soit pour retourner à l'entrée de lavage du moyen d'alimentation du réacteur de prétraitement, soit pour aller à l'entrée de lavage du premier moyen d'alimentation. Et, même quand la liqueur d'imprégnation est très acide, et que le pressât l'est donc également, dans une moindre mesure, cela ne pose aucun problème quant aux outillages, le moyen d'alimentation en biomasse du réacteur d'imprégnation étant généralement conçu pour supporter sans détérioration le contact avec la liqueur catalytique (pour parer à d'éventuelles remontées de liqueur dans le moyen d'alimentation en biomasse).

Dans les deux cas, il reste possible qu'une partie de l'eau usée et/ou du pressât aille à la purge également. Et ces deux cas sont alternatifs ou cumulatifs.

Selon un mode de réalisation préféré, le procédé de l'invention comprend également la réintroduction d'une partie du premier et/ou du deuxième fluide de lavage sortant de la sortie de fluide du premier ou du deuxième moyen d'alimentation dans la zone de préparation de la liqueur d'imprégnation en vue de la préparation a.) de ladite liqueur.

On peut régler et faire varier au besoin au cours du procédé, selon les besoins, la proportion du fluide de lavage en sortie qui va être ré introduite dans le moyen d'alimentation par rapport à la proportion qui est utilisée pour préparer la liqueur catalytique ou encore par rapport à la proportion qui va à la purge.

Dans le cas où c'est une partie du pressât qu'on réintroduit dans la zone de préparation de la liqueur, l'avantage est double, puisqu'on diminue la consommation en eau pour la préparation de la liqueur mais aussi la consommation en catalyseur, puisque le pressât en contient. L'étape de préparation de liqueur se fait généralement avec des moyens de régulation variés vis-à-vis de certains paramètres physico-chimiques, comme la température, le taux de catalyseur dans la liqueur (par la régulation du pH par exemple quand il s'agit de catalyse acide ou basique), cet apport de catalyseur additionnel peut donc être pris en compte par ces moyens de régulation pour maintenir les caractéristiques voulues pour la liqueur.

Le lavage des premier et/ou deuxième moyens d'alimentation peut se faire de façon continue ou discontinue, donc avec lavage en permanence ou selon des intervalles de temps donnés par exemple. Le débit de circulation de lavage peut aussi varier, notamment en fonction du débit de masse de biomasse introduite dans l'un et l'autre des réacteurs.

La réintroduction d'une partie du premier et/ou du deuxième fluide de lavage sortant de la sortie de fluide dudit premier ou dudit deuxième moyen d'alimentation dans l'entrée de lavage du premier moyen d'alimentation et/ou du deuxième moyen d'alimentation peut également se faire de façon continue ou discontinue.

Selon un mode de réalisation, une partie du premier fluide de lavage en sortie de lavage du premier moyen d'alimentation est réintroduite dans l'entrée de lavage du premier ou du deuxième moyen d'alimentation, et une autre partie dudit fluide de lavage est réintroduite dans la zone de préparation de la liqueur en vue de sa préparation.

Symétriquement, selon un deuxième mode de réalisation compatible avec le précédent, une partie du deuxième fluide de lavage en sortie de lavage du deuxième moyen d'alimentation est réintroduite dans l'entrée de lavage du premier ou du deuxième moyen d'alimentation et une autre partie dudit fluide de lavage est réintroduite dans la zone de préparation de la liqueur en vue de sa préparation.

Selon un mode de réalisation, le lavage du moyen d'alimentation s'effectue en présence de biomasse additionnée d'un catalyseur, notamment un catalyseur acide, basique ou oxydant, le fluide de lavage sortant de la sortie de fluide dudit moyen d'alimentation contient une certaine teneur en ledit catalyseur quand la biomasse subit une extraction liquide en traversant ledit moyen d'alimentation, et ledit fluide de lavage contenant ce catalyseur est réintroduit au moins en partie dans l'entrée de lavage du même moyen d'alimentation ou d'un autre desdits moyens d'alimentation, notamment convoyant de la biomasse dépourvue de catalyseur. Le terme « catalyseur « est ici à prendre au sens large comme tout agent réactif susceptible d'interagir avec la biomasse, notamment en vue d'une modification de l'une de ses propriétés physico-chimiques ou rhéologiques. Avec l'invention, on a donc découvert qu'on pouvait recycler une eau de lavage, même additionnée d'un tel catalyseur, pour la réintroduire soit dans le même moyen d'alimentation, soit dans un autre, qui, lui, ne transporte que de la biomasse : le fait que l'eau de lavage réintroduite ne soit pas de l'eau pure mais additionnée de catalyseur s'est avérée sans impact néfaste sur le procédé dans son ensemble, ce qui était inattendu.

L'invention a également pour objet l'installation mettant en œuvre le procédé précédemment décrit, notamment une installation qui comprend au moins un réacteur de traitement d'une biomasse lignocellulosique présentant un taux de matière sèche d'au plus 90% en poids avec une alimentation en biomasse du ou d'au moins un desdits réacteurs par un moyen d'alimentation créant une augmentation de pression entre l'entrée de biomasse et la sortie de biomasse dudit moyen d'alimentation. Le lavage dudit moyen d'alimentation est opéré par circulation d'un fluide de lavage entre une entrée de lavage et une sortie de lavage, et un moyen de réintroduction d'une partie au moins du fluide de lavage sortant de la sortie de fluide du ou d'au moins un des moyens d'alimentation dans l'entrée de lavage du même moyen d'alimentation ou d'un autre desdits moyens d'alimentation

L'invention également pour objet un mode de réalisation d'une installation de traitement d'une biomasse lignocellulosique, comprenant :
- Une zone de préparation d'une liqueur d'imprégnation contenant un catalyseur chimique pour l'imprégnation de la biomasse, choisi parmi un catalyseur acide, basique ou oxydant, et de préférence un catalyseur acide, et munie d'une sortie de liqueur
- Un réacteur d'imprégnation, comprenant notamment une première zone d'imprégnation munie d'une entrée de biomasse et une deuxième zone superposée à la première, dite zone d'égouttage, ledit réacteur étant muni d'une entrée et d'une sortie de biomasse
- Un premier moyen d'alimentation en biomasse broyée du réacteur d'imprégnation par l'entrée de biomasse du réacteur d'imprégnation, notamment située dans la première zone d'imprégnation
- Un moyen d'alimentation en liqueur d'imprégnation du réacteur reliant une sortie en liqueur de la zone de préparation de la liqueur à une première entrée de liqueur dans le réacteur d'imprégnation, notamment dans sa première zone d'imprégnation
- Un réacteur de prétraitement de la biomasse imprégnée par explosion à la vapeur dont une entrée de biomasse est reliée à la sortie de biomasse du réacteur d'imprégnation
- Un deuxième moyen d'alimentation en biomasse imprégnée du réacteur de prétraitement par l'entrée en biomasse dudit réacteur de prétraitement
- Une circulation de fluide de lavage entre une entrée et une sortie du premier moyen d'alimentation en biomasse broyée du réacteur d'imprégnation
- Une circulation de fluide de lavage entre une entrée et une sortie du deuxième moyen d'alimentation en biomasse imprégnée du réacteur de prétraitement
   l'installation comprenant également
- Un moyen de réintroduction d'une partie au moins du premier et/ou du deuxième fluide de lavage sortant de la sortie de fluide dudit premier ou dudit deuxième moyen d'alimentation dans l'entrée de lavage du premier moyen d'alimentation et/ou du deuxième moyen d'alimentation.

Avantageusement, l'installation comprend également un moyen de réintroduction d'une partie du premier et/ou du deuxième fluide de lavage sortant de la sortie de fluide du premier ou du deuxième moyen d'alimentation dans la zone de préparation de la liqueur d'imprégnation.

Avantageusement, elle peut prévoir un moyen de réintroduction d'une partie du premier fluide de lavage en sortie de lavage du premier moyen d'alimentation dans l'entrée de lavage du premier ou du deuxième moyen d'alimentation, et un moyen de réintroduction d'une autre partie dudit fluide dans la zone de préparation de la liqueur.

L'installation selon l'une l'invention peut également prévoir un moyen de réintroduction d'une partie du deuxième fluide de lavage en sortie de lavage du deuxième moyen d'alimentation dans l'entrée de lavage du premier ou du deuxième moyen d'alimentation, et un moyen de réintroduction d'une autre partie dudit fluide dans la zone de préparation de la liqueur.

Ces moyens de réintroduction sont avantageusement des conduites ou ensemble de conduites permettant la connexion hydraulique voulue, dont la réalisation est connue en soi.

L'invention a également pour objet l'utilisation du procédé ou de l'installation décrits précédemment pour le traitement de toute biomasse lignocellulosique, du type bois, paille, résidus agricoles, et toutes cultures énergétiques dédiées, qui peuvent être des plantes annuelles ou pluriannuelles comme le miscanthus, en vue de produire des sucres, des biocarburants ou des molécules bio-sourcées.

### Description détaillée

L'invention sera ci-après détaillée à l'aide d'exemples non limitatifs du procédé selon l'invention, illustrés par les figures suivantes :
- Figure 1 : une représentation synoptique, de type schéma-bloc, du principe général du procédé de traitement de biomasse selon l'invention,
- Figure 2 : une représentation synoptique, de type schéma-bloc, d'un premier mode de réalisation de procédé de traitement de biomasse selon l'invention,
- Figure 3 : une représentation synoptique, de type schéma-bloc, d'un deuxième mode de réalisation de procédé de traitement de biomasse selon l'invention,
- Figure 4 : une représentation synoptique, de type schéma-bloc, d'un troisième mode de réalisation de procédé de traitement de biomasse selon l'invention,

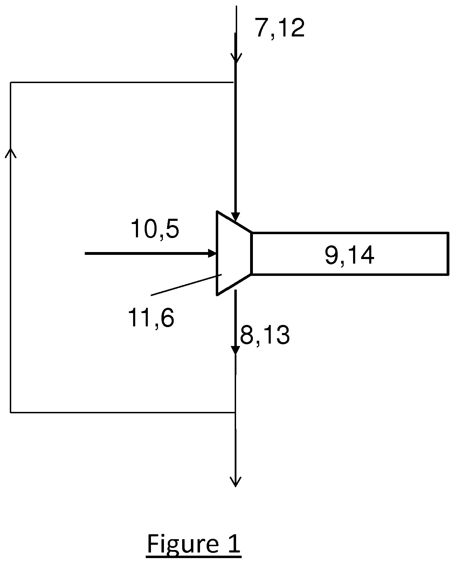

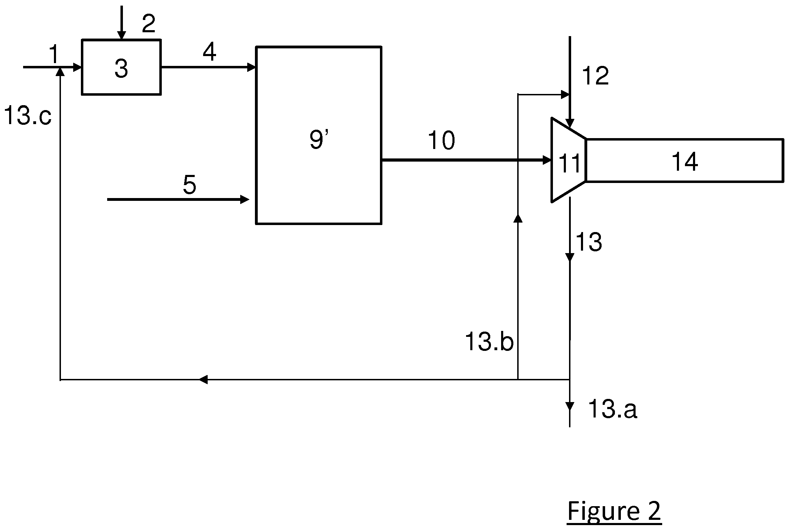

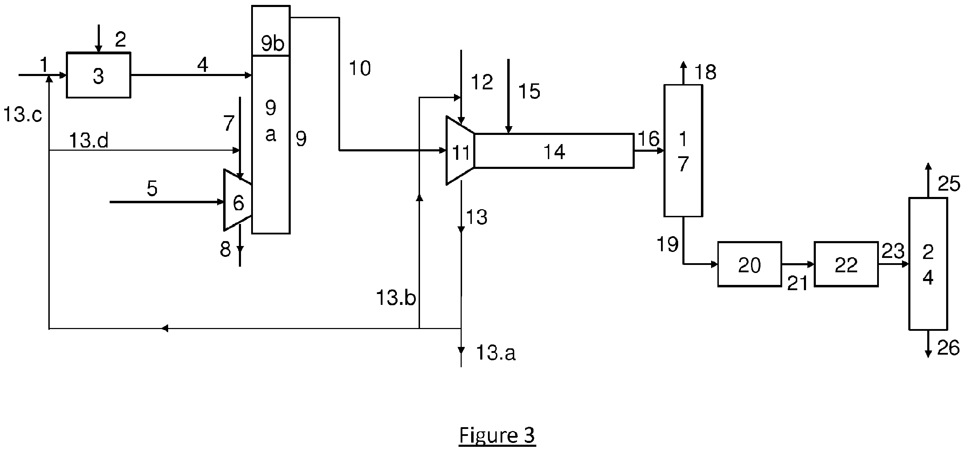

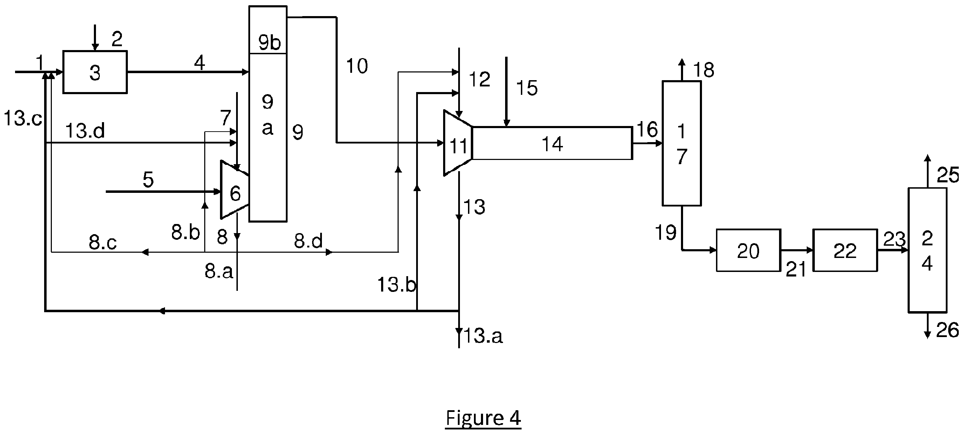

La figure 1 est donc la représentation du principe de l'invention, la figure 2 se concentre sur deux étapes de traitement de la biomasse : imprégnation catalytique puis cuisson. Les figures 3 et 4 décrivent le procédé de traitement complet de la biomasse jusqu'à son hydrolyse enzymatique, après l'imprégnation et la cuisson.

L'invention s'intéresse plus particulièrement aux deux premières étapes, à savoir l'imprégnation de la biomasse broyée et le traitement par cuisson de la biomasse une fois imprégnée.

### Description des figures à partir des références suivantes

Les mêmes références correspondant aux mêmes composants / fluides / produits sur l'ensemble des figures :
- 1 :: Entrée d'eau dans la cuve de préparation de la liqueur
- 2 :: Entrée d'acide dans la cuve de préparation de la liqueur
- 3 :: Outil (cuve) de préparation de la liqueur
- 4 :: Liqueur acide vers outil (réacteur) d'imprégnation
- 5 :: Biomasse broyée
- 6 :: Vis ou plug-screw feeder de l'outil d'imprégnation
- 7 :: Eau de lavage de la plug-screw feeder de l'outil d'imprégnation
- 8 :: Sortie liquide de lavage de la plug screw feeder de l'outil d'imprégnation
- 9, 9' :: Outil (réacteur) d'imprégnation
- 9a :: Zone d'imprégnation de la cuve d'imprégnation 9
- 9b :: Zone d'égouttage de la cuve d'imprégnation 9
- 10 :: Biomasse imprégnée et égouttée
- 11 :: Vis ou plug-screw feeder de l'outil de prétraitement
- 12 :: Eau de lavage de la plug screw feeder de l'outil de prétraitement
- 13 :: Pressât de la plug screw feeder de l'outil de prétraitement
- 13.a :: Pressât vers purge
- 13.b :: Recyclage du pressât pour le lavage de la plug-screw feeder de l'outil de prétraitement
- 13.c :: Recyclage du pressât dans la cuve de préparation de liqueur acide 3
- 13.d :: Recyclage du pressât pour le lavage de la plug-screw feeder de l'outil d'imprégnation
- 14 :: Outil de cuisson (réacteur d'explosion) de prétraitement
- 15 :: Injection de vapeur pour le prétraitement
- 16 :: Biomasse prétraitée et vapeur
- 17 :: Outil (cyclone) de séparation vapeur et biomasse prétraitée
- 18 :: Vapeur vers condensation
- 19 :: Biomasse prétraitée
- 20 :: Hydrolyse enzymatique
- 21 :: Moût d'hydrolyse enzymatique contenant des sucres
- 22 :: Fermentation alcoolique (éthanolique)
- 23 :: Vin de fermentation contenant de l'éthanol (alcool)
- 24 :: Distillation
- 25 :: Alcool concentré
- 26 :: Vinasses brutes

**La** **figure 1** représente de façon très schématique le principe de l'invention dans sa réalisation la plus simple (procédé dont les détails et différentes étapes seront ensuite décrits à l'aide des figures 2 à 4) : la biomasse 5,10 (imprégnée ou pas d'une liqueur catalytique) est introduite dans un réacteur 9,14 pour un traitement, par un moyen d'alimentation sous pression 6,11 qui est une vis, appelée aussi en anglais « Plug Screw Feeder », dont la portion terminale est conique, qui présente un carénage avec une grille d'égouttage, une entrée d'eau de lavage 7,12 et une sortie d'eau de lavage 8,13. Un bouchon hermétique de biomasse se crée en portion aval de la vis, qui crée une compression sur la biomasse se traduisant par une différence de pression entre l'entrée de la biomasse et la sortie de la biomasse de la vis d'au moins 0,05 MPa, par exemple d'environ 0,5 MPa. La compression s'appliquant sur la biomasse peut conduire à l'expulsion d'une partie du liquide contenu dans la biomasse, notamment lorsque la MS de la biomasse est inférieure à 80% avant son entrée dans le moyen d'alimentation sous pression 6,11. Le liquide ainsi extrait se mélange avec l'eau de lavage et est soutiré avec l'eau de lavage usée 8,13.

Selon l'invention, une partie au moins de l'eau de lavage en sortie de la vis 8,13 est réinjectée en entrée d'eau de lavage 7,12 de la vis. On note qu'il reste possible qu'une partie d'eau de lavage en sortie soit simplement purgée, et qu'une partie d'eau de lavage en entrée provienne d'une arrivée d'eau comme dans l'art antérieur, pour compléter la quantité d'eau recyclée en entrée de la vis, ponctuellement ou systématiquement.

Dans cette représentation, le recyclage de l'eau de lavage s'applique à la même vis, mais, comme cela sera détaillé avec les autres figures, l'invention concerne aussi le recyclage total ou partiel de l'eau de lavage en sortie d'une vis vers l'entrée d'une autre vis d'alimentation, quand le procédé prévoit plusieurs vis d'alimentation pour plusieurs réacteurs.

Le taux de matière sèche de la biomasse en entrée de la vis d'alimentation est ici de 50%. Il se peut qu'une partie du liquide de la biomasse soit extraite lors de son transport dans la vis, cette eau extraite venant se mêler à l'eau de lavage usée en sortie de lavage de la vis. Plus le taux de matière sèche de la biomasse est faible, plus il y aura extraction de fluide de la biomasse dans la vis d'alimentation, ce fluide venant compléter voire éventuellement remplacer en totalité le fluide de lavage en entrée de la vis.

**La** **figure 2** représente une étape d'imprégnation de la biomasse par une liqueur acide, puis une étape de cuisson faisant partie d'un traitement de biomasse:
Le procédé se déroule de la façon suivante : L'eau et l'acide sont introduits respectivement par les conduites 1 et 2 dans la cuve de préparation de la liqueur acide 3. La liqueur acide de la conduite 4 est ensuite injectée dans un dispositif d'imprégnation 9' pour être mélangée avec la biomasse broyée. Le dispositif d'imprégnation est ici un convoyeur, du type tapis de convoyage entrainé en translation par rotation de rouleaux supportant le tapis, tapis sur lequel est disposée la biomasse selon une épaisseur donnée. La biomasse est soumise lors de son convoyage à l'aspersion de liqueur acide prélevée de la cuve 3, par des buses disposées au-dessus du tapis. L'excès de liqueur peut être récupéré sous le tapis dans une zone de collecte, pour être éventuellement recyclé en tout ou partie.

La biomasse imprégnée 10, éventuellement préalablement égouttée, est introduite dans l'unité de traitement 14 au moyen d'une autre vis d'alimentation de type « Plug Screw Feeder » 11 qui comprime la biomasse pour former un bouchon de biomasse. Ce bouchon hermétique de biomasse assure l'étanchéité et empêche les fuites de vapeur, quand la réaction de cuisson dans ce réacteur 14 de la biomasse se poursuit par une explosion à la vapeur. Lors de cette compression dans la vis 11, une séparation solide/liquide a lieu, et la liqueur acide usée est évacuée à travers la grille du carénage de la vis. Cette vis est lavée avec de l'eau de la conduite 12 qui se mélange ainsi, à de la liqueur acide usée, le mélange d'eau de lavage et de liqueur acide usée (appelé pressât) est évacué dans la conduite 13. Le pressât peut en outre contenir du solide issu du lavage de la vis 11.

Optionnellement, une étape de séparation solide/liquide est réalisée sur ce flux 13, par exemple avec un dispositif utilisant une grille de forme courbe.

Le flux 13 peut ensuite être dirigé vers :
- une purge par la conduite 13a
- en recyclage par la conduite 13b pour remplacer tout ou partie de l'eau de lavage 12 de la vis 11
- en recyclage dans la cuve de préparation de liqueur acide 3 par la conduite 13c;

Différentes possibilités s'offrent alors :
- selon un mode de réalisation, tout le flux 13 est envoyé dans la conduite 13b pour remplacer tout ou partie de l'eau de lavage 12,
- selon un autre mode de réalisation, une partie seulement du flux 13 est envoyé dans la conduite 13b pour remplacer tout ou partie de l'eau de lavage 12, et le reste est envoyé via la conduite 13c pour contribuer à la fabrication de liqueur (par exemple dans une proportion volumique entre les deux variant entre 20/80 et 80/20).

La biomasse est traitée dans l'outil de traitement 14 par cuisson et explosion à la vapeur de la façon décrite dans les figures suivantes.

**La** **figure 3** présente une variante par rapport à la figure 2 dans la façon de réaliser l'imprégnation de la biomasse, et elle représente aussi les étapes ultérieures à la cuisson/explosion à la vapeur de la biomasse.

Seules seront décrites ici les différences d'avec le procédé selon la figure 2, les deux procédés étant identiquement réalisés par ailleurs.

L'eau et l'acide sont introduits respectivement par les conduites 1 et 2 dans la cuve de préparation de la liqueur acide 3. La liqueur acide de la conduite 4 est ensuite injectée dans un dispositif d'imprégnation 9 pour être mélangée avec la biomasse broyée. Il s'agit ici d'un réacteur, ici disposé sensiblement à la verticale,

La biomasse préalablement broyée est introduite dans le procédé par la conduite 5 dans une vis d'alimentation 6, similaire à la vis 11 déjà décrite à la figure précédente, avec également un circuit de lavage à l'eau. Cette vis permet de former un bouchon hermétique de biomasse qui assure l'étanchéité et empêche les fuites de liqueur acide. Cette vis est lavée par de l'eau qui entre par la conduite 7 et ressort par la conduite 8. En sortie de la vis, l'expansion du bouchon se fait dans la zone basse du réacteur d'imprégnation 9. La biomasse s'imprègne de liqueur acide dans la zone d'imprégnation 9a avant d'être égouttée dans la zone d'égouttage 9b. Elle est convoyée dans le réacteur 9 par une ou deux vis de transport.

Le flux 13 peut ensuite être dirigé, comme précédemment vers :
- une purge par la conduite 13a
- en recyclage par la conduite 13b pour remplacer tout ou partie de l'eau de lavage 12 de la vis 11
- en recyclage dans la cuve de préparation de liqueur acide 3 par la conduite 13c;
- mais une autre possibilité s'offre également, car ici le flux 13 peut aussi être recyclé par la conduite 13d pour remplacer tout ou partie de l'eau de lavage 7 de la vis 6

Poursuivons avec la description plus détaillée du réacteur 14 commun aux figures 2 à 4 et aux étapes suivant le traitement dans ce réacteur 14 :
La vapeur nécessaire à la chauffe du réacteur 14 est introduite par la conduite 15. En sortie de réacteur, le mélange biomasse/vapeur est détendu et conduit par la ligne 16 vers l'outil de séparation 17. L'outil de séparation 17 peut être de type cyclone, il permet de séparer la vapeur 18 de la biomasse prétraitée 19.

La biomasse prétraitée est ensuite transformée dans l'outil de transformation 20 en un moût 21 contenant des sucres en utilisant un cocktail enzymatique. Les sucres sont convertis en alcool (ex : éthanol, acétone, butanol) par fermentation dans l'étape 22 de fermentation. Le vin de fermentation 23 est envoyé vers une étape de séparation et purification 24. L'étape 24, réalisée par exemple par distillation, permet de séparer un flux 25 contenant l'alcool concentré des vinasses brutes (eau usée, lignine résiduelle) 26.

On ne rentrera pas ici dans le détail des conditions opératoires des étapes d'explosion à la vapeur, de conversion en moût et de fermentation, considérées comme connues de l'homme de l'art.

**La** **figure 4** présente une variante par rapport à la figure 3

Les références supplémentaires par rapport à la figure 3 sont :
8 : Sortie liquide de lavage usée de la vis 6 de l'outil d'imprégnation
8.a : Liquide de lavage usé vers purge
8.b : Liquide de lavage recyclé pour le lavage de la vis de l'outil d'imprégnation
8.c : Liquide de lavage recyclé dans la cuve de préparation de la liqueur acide 3
8.d : Liquide de lavage recyclé pour le lavage de la vis 11 de l'outil de prétraitement 14

Seules seront décrites ici les différences d'avec le procédé selon la figure 3, les deux procédés étant identiquement réalisés par ailleurs :
Ici, on recycle aussi l'eau de lavage 8 de la vis d'alimentation 6 selon différentes possibilités alternatives ou cumulatives. Le liquide de lavage 8 de la vis de transfert 6 peut être soit :
- purgé du système par la conduite 8a
- recyclé par la conduite 8b pour remplacer l'eau de lavage 7 de la vis d'alimentation 6 du réacteur d'imprégnation 9
- recyclé par la conduite 8c dans la cuve de liqueur acide 3
- recyclé par la conduite 8d pour remplacer l'eau de lavage 12 de la vis 11 d'alimentation de l'outil / réacteur d'explosion 14.

Selon un autre mode de réalisation de l'invention, tout le flux 8 est envoyé dans la conduite 8b ou dans la conduite 8d pour remplacer tout ou partie de l'eau de lavage 12 ou 7. Selon un autre mode, une partie est envoyée dans la conduite 8b ou 8b, et le reste est envoyé par la conduite 8c pour contribuer à la préparation de la liqueur d'imprégnation. Le ratio entre les deux parties, en volume, peut être compris entre 80/20 et 20/80.

Dans tous les cas de figure, aussi bien en ce qui concerne donc le recyclage de l'eau usée de la vis 6 ou du pressât de la vis 11, une partie peut aussi être prélevée pour aller à la purge (conduites 13a, 8a).

Naturellement, il est également dans le cadre de l'invention de combiner le recyclage de l'eau usée de lavage de la vis 6 avec celui du pressât de la vis 11, ou de ne recycler que l'une ou l'autre.

Ci-après quelques précisions ou variantes opératoires pour les deux premières étapes de traitement de la biomasse décrites précédemment :
L'étape d'imprégnation est opérée à une température allant de 10 à 95°C, et le temps de séjour de la biomasse dans ladite étape d'imprégnation est compris entre 20 secondes et 12 heures. De manière préférée, le temps de séjour de la biomasse est compris entre 30secondes et 60 minutes.

L'étape d'imprégnation peut être opérée en batch ou en continu. De manière préférée, cette étape est opérée en continu. L'étape d'imprégnation est de manière préférée réalisée à pression atmosphérique. De préférence, l'étape d'imprégnation est effectuée en une seule étape.

L'étape d'imprégnation réalise une mise en contact entre la biomasse et la liqueur acide. Elle peut être opérée par exemple par trempage ou par aspersion.

L'étape d'imprégnation est réalisée dans des équipements connus de l'homme du métier, par exemple dans un réacteur agité, par traversée horizontale ou verticale de la biomasse dans un lit de liqueur, par aspersion sur un tapis transportant la biomasse (comme vu à la figure 2) ou dans une vis de transport.

Le réacteur d'imprégnation ou imprégnateur est généralement muni d'une ou plusieurs outils qui transfère(nt) le substrat lignocellulosique depuis son entrée vers l'ouverture de sortie. Ces outils peuvent être par exemple des vis ou des tapis. L'imprégnateur est par ailleurs équipé d'une ou plusieurs conduites pour amener la liqueur acide ainsi que, si besoin, d'une ou plusieurs conduites pour soutirer de la liqueur acide. Lesdites conduites d'entrée et de sortie de la liqueur acide sont généralement installées de façon à fonctionner en recyclage co-courant ou contre-courant.

### L'étape de prétraitement (cuisson) :

Le substrat lignocellulosique subit cette étape de prétraitement, qui vise notamment à modifier les propriétés physiques et physicochimiques de la fraction cellulosique, telles que son degré de polymérisation et son état de cristallinité.

Le prétraitement inclut une zone de cuisson. Cette cuisson s'effectue à une température comprise entre 100°C et 250°C, et plus préférentiellement entre 130°C et 230°C, à une pression comprise entre 0,1 et 4 MPa. Le temps de séjour dans la zone de cuisson est compris entre 10 secondes et 4 heures, et plus préférentiellement entre 3 minutes et 1 heure.

La cuisson peut avoir lieu en batch ou en continu. Elle peut être réalisée dans tout équipement connu de l'homme du métier, par exemple un réacteur agité, un réacteur tubulaire horizontal muni d'une vis de transport, un réacteur batch non agité, etc... L'énergie thermique nécessaire à la cuisson peut être apportée via un échange thermique avec un fluide caloporteur (indirect), par chauffage électrique, ou bien par injection directe d'un fluide chaud, par exemple de l'eau pressurisée ou de la vapeur.

La sortie du solide en fin de cuisson peut se faire par décompression rapide, par décompression lente, après une baisse de température induite par un échange thermique direct ou indirect, etc...

Dans un mode de réalisation (préféré), la zone de cuisson est chauffée à la vapeur par injection directe et est suivie d'une décompression brutale du milieu, ce procédé est connu sous le nom d'explosion à la vapeur ("SteamEx" ou "Steam Explosion" selon la terminologie anglo-saxonne). C'est un procédé dans lequel le substrat lignocellulosique est porté rapidement à haute température par injection de vapeur sous pression. L'arrêt du traitement s'effectue par décompression brutale.

Les conditions opératoires du procédé d'explosion à la vapeur sont les suivantes :
- la vapeur est injectée directement dans le réacteur ;
- la température du réacteur est généralement comprise entre 150 et 250°C, de préférence comprise entre 160°C et 220°C,
- la pression est comprise entre 0,5 et 2,5 MPa, plus préférentiellement comprise entre 0,8 et 2,0 MPa.
- le temps de séjour avant la phase de détente varie de 10 secondes à 25 minutes, et de préférence entre 3 minutes et 15 minutes

L'explosion à la vapeur peut être réalisée en batch ou en continu et l'étape de dépressurisation qui permet de déstructurer la biomasse peut se dérouler en une ou plusieurs étapes.

Nous décrivons maintenant des exemples de réalisation de ce ou ces recyclages, utilisant le procédé selon la figure 4 :

### Exemple 1 comparatif

C'est un exemple avec seulement le recyclage des eaux de lavages usées comme appoint d'eau de la cuve de préparation de la liqueur. La biomasse à traiter est du bois présentant les caractéristiques suivantes :
Charge : Bois peuplier, débit 7,47 tonnes / heure, teneur en Matière Sèche (MS) : 50%, composition moyenne (base MS) :

| | % (base MS) |
|---|---|
| Cellulose | 42,6% |
| Hémicellulose | 20,5% |
| Lignine et autres (cendres, extractibles, etc...) | 36,9% |

L'acronyme "MS" désigne le taux de matière sèche qui est mesurée selon la norme ASTM E1756 - 08(2015) « Standard Test Method for Détermination of Total Solids in Biomass".

Le bois est utilisé sous forme de plaquettes de dimension caractéristique 50 mm. La température des plaquettes en entrée d'unité est la température ambiante. Les plaquettes 5 sont convoyées vers le réacteur d'imprégnation 9 par la vis conique 6. Cette vis est lavée par de l'eau de lavage 7,8 à un débit de 1 tonne/h. Lors de la compression opérée par la vis 6, du liquide est extrait des plaquettes de peuplier à raison de 0,679 tonne/h, le débit total d'eau de lavage usée de la vis 6 du réacteur d'imprégnation 9 est ainsi de 1,679 tonne/h.

Dans le réacteur d'imprégnation 9 sont introduites :
- les plaquettes de bois compressées, via la vis conique 6
- 2,9 tonnes / heure d'une liqueur acide 4 préparée avec de l'eau 1 et de l'acide sulfurique 2 en concentration massique 1,57% en poids (pds), à une température de 90°C

Les plaquettes imprégnées sont sorties du réacteur d'imprégnation 9 et transférées vers un réacteur d'explosion à la vapeur 14. L'entrée dans le réacteur de prétraitement se fait par transfert par une autre vis conique 11. Cette vis est lavée par de l'eau de lavage à un débit de 0,6 tonne/h. Lors de la compression opérée par la vis 11, du liquide est extrait des plaquettes de peuplier imprégnées à raison de 2,95 tonne/h, le débit total d'eau de lavage usée de la vis 6 du réacteur d'imprégnation 9 est ainsi de 3,55tonne/h. Ce flux contient 0,5%pds d'H₂SO₄.

Le prétraitement par explosion à la vapeur est effectué à 200°C dans une configuration continue employant un court temps de séjour. Le milieu est brusquement détendu à une pression de 1,3 atm.

La cuve 3 de préparation de liqueur acide située en amont de l'imprégnation délivre un débit de 2,9 tonne/h de liqueur acide. Cette liqueur est préparée avec de l'eau et de l'acide sulfurique à 96%, les débits respectifs sont de 2,8526 tonne/h d'eau et de 0,0474 tonne/h d'acide concentré à 96%pds. La consommation totale d'eau dans cette configuration est de 4.5526 tonne/h et la consommation totale d'acide de 0,0474 tonne/h d'acide sulfurique concentré à 96%pds.

Les eaux de lavage usées des vis 6 et 11 sont envoyées à la purge par les conduites 8a et 13a.

### Example 2 comparatif

Il reprend l'exemple comparatif 1, à la différence qu'ici, une partie 13c du flux issu du lavage de la vis 11 du réacteur d'explosion 14 est envoyé vers la cuve de préparation 3 de liqueur acide : ce débit est égal à l'appoint de liquide nécessaire compte-tenu de l'appoint d'acide qu'il convient de faire pour avoir l'acidité ciblée. Ainsi, le débit de liquide recyclé est de 2,8675 tonne/h et le débit d'acide d'appoint est de 0,0325 tonne/h d'acide sulfurique à 96%pds. Dans cette deuxième configuration, la consommation totale d'eau est de 1,6 tonne/h (pour le lavage de la vis 11 et la consommation d'acide est de 0,0325 tonne/h d'acide sulfurique à 96% pds. Un flux de 2,362 tonne/h d'eaux usées doit être traité.

### Exemple 3 selon l'invention

Dans cet exemple, on présente un procédé d'imprégnation selon l'invention et de prétraitement de bois traitant la même charge que les exemples comparatifs 1 et 2 précédents. Le bois est utilisé sous forme de plaquettes de dimension caractéristique 50mm. La température des plaquettes en entrée d'unité est la température ambiante.

Les plaquettes sont convoyées vers le réacteur d'imprégnation 9 par la vis conique 6. Cette vis est lavée par un liquide de lavage 7,8, 13d à un débit de 1,0 tonne/h, ce liquide provient du mélange d'eau 7 et du liquide de lavage 13d de la vis 11 du réacteur de prétraitement 14. Lors de la compression opérée par la vis 6, du liquide est extrait des plaquettes de peuplier à raison de 0,679 tonne/h, le débit total d'eau de lavage usée de la vis 6 du réacteur d'imprégnation 9 est ainsi de 1,679 tonne/h.

Dans le réacteur d'imprégnation 9 sont introduites :
- les plaquettes de bois compressées via la vis 6 conique
- 2,9 tonne / heure d'une liqueur acide 4 préparée avec de l'eau 1 et de l'acide sulfurique 2 en concentration massique 1,57% pds, à une température de 90°C

Les plaquettes imprégnées sont sorties du réacteur d'imprégnation 9 et transférées vers un réacteur d'explosion à la vapeur 14. L'entrée dans le réacteur de prétraitement 14 se fait par transfert par une deuxième vis conique 11. Cette vis 11 est lavée par de l'eau de lavage 12,13 à un débit de 0,6 tonne/h. Lors de la compression opérée par la vis 11, du liquide est extrait des plaquettes de peuplier imprégnées à raison de 2,95 tonne/h, le débit total d'eau de lavage usée de la vis 11 du réacteur 14 est ainsi de 3,55 tonne/h. Ce flux contient 0,5% pds d'H₂SO₄. Le prétraitement par explosion à la vapeur est effectué à 200°C dans une configuration continue employant un court temps de séjour. Le milieu est brusquement détendu à une pression de 1,3 atm.

La cuve 3 de préparation de liqueur acide située en amont de l'imprégnation délivre un débit de 2,9 tonne/h de liqueur acide. De préférence, elle est équipée de capteurs de mesure de pH et de débit pour l'eau, l'acide, la liqueur usée et la liqueur préparée.

Une partie du flux issu du lavage de la vis 11 du réacteur d'explosion 14 est envoyée vers la cuve 3 de préparation de liqueur acide : ce débit est égal à l'appoint de liquide nécessaire, compte-tenu de l'appoint d'acide qu'il convient de faire pour avoir l'acidité ciblée. Ainsi, comme dans les exemples précédents, le débit de liquide recyclé est de 2,8675 tonne/h et le débit d'acide d'appoint est de 0,0325 tonne/h d'acide sulfurique à 96% pds. La partie 13d du flux de liquide de lavage usé 13 de la vis 11 du réacteur de prétraitement 14 qui n'est pas envoyée pour l'appoint de liquide de la cuve 3 de liqueur est envoyée pour laver la vis 6 du réacteur d'imprégnation 9 , à un débit de 0,683 tonne/h, en complément de 0,317 tonne/h d'eau. La consommation d'eau totale est donc de 0,917 tonne/h. Un flux de 1,679 tonne/h d'eaux usées doit être traité.

Ainsi, le procédé selon l'invention permet par rapport à la configuration de l'exemple 2 comparatif :
- une réduction de la consommation massique d'eau de plus de 42%
- une réduction de 29% de la masse d'eaux usées à traiter

### Exemple 4 selon invention

Dans cet exemple, on présente un procédé d'imprégnation selon l'invention et de prétraitement de bois traitant la même charge que l'exemple comparatif 1.

Le bois est utilisé sous forme de plaquettes de dimension caractéristique 50mm. La température des plaquettes en entrée d'unité est la température ambiante.

Les plaquettes sont convoyées vers le réacteur d'imprégnation 9 par la vis conique 6. Cette vis est lavée par de l'eau de lavage 7 à un débit de 1,0tonne/h. Lors de la compression opérée par la vis, du liquide est extrait des plaquettes de peuplier à raison de 0,679 tonne/h, le débit total d'eau de lavage usée de la vis 6 du réacteur d'imprégnation 9 est ainsi de 1,679 tonne/h.

Dans le réacteur d'imprégnation 9 sont introduites :
- les plaquettes de bois compressées, via la vis 2 conique
- 2,9 tonne / heure d'une liqueur acide 4 préparée avec de l'eau 1 et de l'acide sulfurique 2 en concentration massique 1,57% pds, à une température de 90°C

Les plaquettes imprégnées sont sorties du réacteur d'imprégnation 9 et transférées vers un réacteur d'explosion à la vapeur 14. L'entrée dans le réacteur de prétraitement 14 se fait par transfert par une deuxième vis conique 11. Lors de la compression opérée par la vis, du liquide 13 est extrait des plaquettes de peuplier imprégnées à raison de 2,95 tonne/h. Une partie 13b de ce flux, 1,5 tonne/h, est utilisé pour laver la vis conique 11, selon l'invention. Le débit total d'eau de lavage usée de la vis 6 du réacteur d'imprégnation 9 est ainsi de 4,45 tonne/h, dont 1,5 tonne/h sont recyclés pour le lavage 13b. Ce flux contient 0,602% pds d'H₂SO₄. Ce flux est plus concentré en acide que le flux extrait de l'exemple 1, car la liqueur acide usée extraite lors de la compression n'a pas été diluée par l'eau de lavage de la vis. Le prétraitement par explosion à la vapeur est effectué à 200°C dans une configuration continue employant un court temps de séjour. Le milieu est brusquement détendu à une pression de 1,3 atm.

La cuve 3 de préparation de liqueur acide située en amont de l'imprégnation délivre un débit de 2,9 tonne/h de liqueur acide.

Le flux 13 issu du lavage de la vis 11 du réacteur de prétraitement 14 qui n'est pas utilisé pour le lavage 13b de la vis est envoyé 13c vers la cuve 3 de préparation de liqueur acide à un débit de 2,87 tonne/h, le reste 13a (0,08 tonne/h) est purgé. Le débit d'acide d'appoint est de 0,0294 tonne/h d'acide sulfurique à 96% pds.

Dans le procédé selon cet exemple, la consommation totale d'eau est de 1,0 tonne/h (pour le lavage de la vis 6 d'imprégnation) et la consommation d'acide est de 0,0294 tonne/h d'acide sulfurique à 96% pds. Un flux de 1,759 tonne/h d'eaux usées doit être traité.

Ainsi, le procédé selon cet exemple conforme à l'invention permet par rapport à la configuration de l'exemple 2 comparatif :
- une réduction de la consommation massique d'eau de 37%
- une réduction de 9,4% de la consommation massique d'acide sulfurique concentré
- une réduction de 25% de la masse d'eaux usées à traiter

En conclusion, ces exemples démontrent que l'invention permet des gains énergétiques/ de matières premières très significatifs, avec une grande flexibilité de mise en œuvre. En outre, la modification induite sur l'installation reste modeste et facile à réaliser, avec l'ajout de conduites munies le cas échéant de moyens de variation de débit, de mesure de pH ou de températures, ces conduites additionnelles restant dans leur conception tout à fait à la portée de l'homme de l'art. L'invention reste bénéfique même si les différentes opérations de traitement de la biomasse (par exemple l'opération de d'imprégnation et de cuisson et/ou d'explosion à la vapeur) ne se font pas en continu, on privilégiera dans ce cas le recyclage des eaux de lavage au niveau de la même vis d'alimentation (boucle 8b pour le lavage de la vis 6, boucle 13b pour le lavage de la vis 11.

## Revendications

1. Procédé de traitement d'une biomasse lignocellulosique comprenant un taux de matière sèche d'au plus 90% en poids, ledit procédé comprenant la mise en œuvre d'au moins un réacteur de traitement de ladite biomasse (9,14), où l'on alimente en biomasse le ou au moins un desdits réacteurs par un moyen d'alimentation (6,11) créant une augmentation de pression entre l'entrée de biomasse et la sortie de biomasse dudit moyen d'alimentation, où on lave ledit moyen d'alimentation par circulation d'un fluide de lavage entre une entrée de lavage (7,12) et une sortie de lavage (8,13), **caractérisé en ce qu'**on réintroduit une partie au moins du fluide de lavage sortant de la sortie de fluide du ou d'au moins un des moyens d'alimentation (6,11) dans l'entrée de lavage du même moyen d'alimentation ou d'un autre desdits moyens d'alimentation.

2. Procédé selon la revendication précédente, **caractérisé en ce qu'**on extrait du liquide de la biomasse lors de son passage dans le ou un des moyens d'alimentation (6,11).

3. Procédé selon l'une des revendications précédentes, **caractérisé en ce que** l'augmentation de pression créé dans le ou au moins un des moyens d'alimentation (6,11) est d'au moins 0,05 MPa, notamment entre 0,05 et 4 MPa.

4. Procédé selon l'une des revendications précédentes, **caractérisé en ce qu'**il comprend une étape d'imprégnation de la biomasse par une liqueur d'imprégnation contenant un catalyseur chimique, qui est mise en œuvre par introduction de la biomasse dans le/ un des réacteurs (9,1) muni du moyen d'alimentation (6,11).

5. Procédé selon l'une des revendications 1 à 4, **caractérisé en ce qu'**il comprend une étape d'imprégnation de la biomasse par une liqueur d'imprégnation contenant un catalyseur chimique par traversée de la biomasse dans un lit de liqueur ou par aspersion par la liqueur de la biomasse sur un convoyeur de type tapis (9') ou par passage de la biomasse dans un réacteur agité.

6. Procédé selon l'une des revendications 1 à 4, **caractérisé en ce qu'**il comprend une étape d'imprégnation de la biomasse par une liqueur d'imprégnation contenant un catalyseur chimique, par introduction dans un réacteur (9) par ledit ou au moins un desdits moyens d'alimentation (6).

7. Procédé selon l'une des revendications précédentes, **caractérisé en ce qu'**il comprend une étape de traitement de la biomasse par cuisson, notamment dans le ou un des réacteurs (14) muni d'un moyen d'alimentation (11).

8. Procédé selon l'une des revendications précédentes, ledit procédé comprenant les étapes suivantes :
a. Préparation d'une liqueur d'imprégnation (4) contenant un catalyseur chimique (2) destinée à l'imprégnation de la biomasse (5), choisi parmi un catalyseur acide, un catalyseur basique et un catalyseur oxydant, et de préférence un catalyseur acide, dans une zone de préparation (3)
b. Introduction de la biomasse broyée (5) par une entrée d'un réacteur d'imprégnation (9) à l'aide d'un premier moyen d'alimentation (6), ledit premier moyen d'alimentation étant lavé par circulation d'un premier fluide de lavage (7,8) entre une entrée et une sortie dudit moyen (6)
c. Introduction de la liqueur dans le réacteur d'imprégnation (9) par une première entrée de liqueur (4) du réacteur
d. Transfert de la biomasse imprégnée et égouttée (10) depuis une sortie du réacteur d'imprégnation vers une entrée d'un réacteur (14) de prétraitement par cuisson, l'introduction dans ledit réacteur de prétraitement se faisant par un deuxième moyen d'alimentation (11), ledit deuxième moyen d'alimentation étant lavé par circulation d'un deuxième fluide de lavage (12,13) entre une entrée et une sortie dudit moyen d'alimentation
e. Prétraitement de ladite biomasse (10) dans ledit réacteur par explosion à la vapeur (14)
f. Réintroduction d'une partie au moins du premier et/ou du deuxième fluide de lavage ortant de la sortie de fluide dudit premier ou dudit deuxième moyen d'alimentation (6,11) dans l'entrée de lavage du premier moyen d'alimentation (6) et/ou du deuxième moyen d'alimentation (11).

9. Procédé selon la revendication précédente, **caractérisé en ce qu'**il comprend également :
g. Réintroduction d'une partie du premier et/ou du deuxième fluide de lavage sortant de la sortie de fluide du premier ou du deuxième moyen d'alimentation (6,11) dans la zone de préparation (3) de la liqueur d'imprégnation en vue de la préparation a.) de ladite liqueur

10. Procédé selon l'une des revendications précédentes, **caractérisé en ce que** le et/ou au moins un des moyens d'alimentation est une vis d'alimentation (6,11), notamment au moins en partie conique, comprenant un carénage muni d'une grille permettant la circulation du fluide de lavage et éventuellement l'extraction de fluide de la biomasse.

11. Procédé selon la revendication 7 ou 8, **caractérisé en ce qu'**une partie du premier fluide de lavage (8) en sortie de lavage du premier moyen d'alimentation (6) est réintroduite dans l'entrée de lavage (8b,8d) du premier ou du deuxième moyen d'alimentation, et **en ce qu'**une autre partie dudit fluide de lavage est réintroduite (8c) dans la zone de préparation (3) de la liqueur en vue de sa préparation.

12. Procédé selon la revendication 7 ou 8, **caractérisé en ce qu'**une partie du deuxième fluide de lavage (13) en sortie de lavage du deuxième moyen d'alimentation (11) est réintroduite (13b,13d) dans l'entrée de lavage du premier ou du deuxième moyen d'alimentation (6,11) et **en ce qu'**une autre partie (13c) dudit fluide de lavage est réintroduite dans la zone de préparation (3) de la liqueur en vue de sa préparation.

13. Procédé selon l'une des revendications précédentes, **caractérisé en ce que** le lavage du moyen d'alimentation (11) s'effectue en présence de biomasse additionnée d'un catalyseur, notamment un catalyseur acide, basique ou oxydant, **en ce que** le fluide de lavage sortant de la sortie de fluide dudit moyen d'alimentation (6,11) contient une certaine teneur en ledit catalyseur quand la biomasse subit une extraction liquide en traversant ledit moyen d'alimentation, et ce que ledit fluide de lavage contenant ce catalyseur est réintroduit au moins en partie dans l'entrée de lavage du même moyen d'alimentation ou d'un autre desdits moyens d'alimentation, notamment convoyant de la biomasse dépourvue de catalyseur.

14. Installation mettant en œuvre le procédé selon l'une des revendications précédentes, **caractérisée en ce qu'**elle comprend au moins un réacteur de traitement d'une biomasse lignocellulosique présentant un taux de matière sèche d'au plus 90% en poids avec une alimentation en biomasse du ou d'au moins un desdits réacteurs par un moyen d'alimentation créant une augmentation de pression entre l'entrée de biomasse et la sortie de biomasse dudit moyen d'alimentation, avec lavage dudit moyen d'alimentation par circulation d'un fluide de lavage entre une entrée de lavage et une sortie de lavage, et un moyen de réintroduction d'une partie au moins du fluide de lavage (8,13) sortant de la sortie de fluide du ou d'au moins un des moyens d'alimentation (6,11) dans l'entrée de lavage du même moyen d'alimentation ou d'un autre des dits moyens d'alimentation

15. Installation de traitement d'une biomasse lignocellulosique, comprenant :
- Une zone de préparation (3) d'une liqueur d'imprégnation (4) contenant un catalyseur chimique pour l'imprégnation de la biomasse (5), choisi parmi un catalyseur acide, basique ou oxydant, et de préférence un catalyseur acide, et munie d'une sortie de liqueur
- Un réacteur d'imprégnation (9), ledit réacteur étant muni d'une entrée et d'une sortie de biomasse
- Un premier moyen d'alimentation en biomasse broyée (6) du réacteur d'imprégnation (9) par l'entrée de biomasse du réacteur d'imprégnation,
- Un moyen d'alimentation en liqueur d'imprégnation (4a) du réacteur (5) reliant une sortie en liqueur de la zone de préparation (3) de la liqueur (4) à une première entrée de liqueur dans le réacteur d'imprégnation,
- Un réacteur de prétraitement (14) de la biomasse imprégnée (10) par cuisson dont une entrée de biomasse est reliée à la sortie de biomasse du réacteur d'imprégnation (9)
- Un deuxième moyen d'alimentation (11) en biomasse imprégnée (10) du réacteur de prétraitement par l'entrée en biomasse dudit réacteur de prétraitement (14)
- Une circulation de fluide de lavage (7,8) entre une entrée et une sortie du premier moyen d'alimentation (6) en biomasse broyée (5) du réacteur d'imprégnation (9)
- Une circulation de fluide de lavage (12,13) entre une entrée et une sortie du deuxième moyen d'alimentation (11) en biomasse imprégnée (10) du réacteur de prétraitement (14)
**caractérisée en ce que** l'installation comprend également
- Un moyen de réintroduction d'une partie au moins du premier et/ou du deuxième fluide de lavage sortant de la sortie de fluide dudit premier ou dudit deuxième moyen d'alimentation (6,11) dans l'entrée de lavage du premier moyen d'alimentation et/ou du deuxième moyen d'alimentation.

16. Utilisation du procédé ou de l'installation selon l'une des revendications précédentes pour le traitement de biomasses lignocellulosiques (5), du type bois, paille, résidus agricoles, et toutes cultures énergétiques dédiées, notamment des plantes annuelles ou pluriannuelles telles que le miscanthus vue de produire des sucres, des biocarburants ou des molécules bio-sourcées.

## Patentansprüche

1. Verfahren zur Behandlung einer lignocellulosehaltigen Biomasse, die einen Trockenmassegehalt von höchstens 90 Gew.-% umfasst, wobei das Verfahren den Einsatz mindestens eines Reaktors zur Behandlung der Biomasse (9, 14) umfasst, wobei man dem oder mindestens einem der Reaktoren Biomasse mit einer Zuführeinrichtung (6, 11) zuführt, die einen Druckanstieg zwischen dem Biomasseeinlass und dem Biomasseauslass der Zuführeinrichtung erzeugt, wobei man die Zuführeinrichtung durch Zirkulation einer Reinigungsflüssigkeit zwischen einem Reinigungslass (7, 12) und einem Reinigungsauslass (8, 13) reinigt, **dadurch gekennzeichnet, dass** man mindestens einen Teil der aus dem Flüssigkeitsauslass der oder mindestens einer der Zuführeinrichtungen (6, 11) austretenden Reinigungsflüssigkeit wieder in den Reinigungseinlass derselben Zuführeinrichtung oder einer anderen der Zuführeinrichtungen einleitet.

2. Verfahren nach dem vorhergehenden Anspruch, **dadurch gekennzeichnet, dass** man Flüssigkeit aus der Biomasse bei deren Durchlauf in der oder einer der Zuführeinrichtungen (6, 11) extrahiert.

3. Verfahren nach einem der vorhergehenden Ansprüche, **dadurch gekennzeichnet, dass** der Druckanstieg, der in der oder mindestens einer der Zuführeinrichtungen (6, 11) erzeugt wird, mindestens 0,05 MPa, insbesondere zwischen 0,05 und 4 MPa beträgt.

4. Verfahren nach einem der vorhergehenden Ansprüche, **dadurch gekennzeichnet, dass** es einen Schritt des Imprägnierens der Biomasse mit einer Imprägnierlösung, die einen chemischen Katalysator enthält, umfasst, der durch Einleiten der Biomasse in den/einen der Reaktoren (9, 1), der mit der Zuführeinrichtung (6, 11) versehen ist, umgesetzt wird.

5. Verfahren nach einem der Ansprüche 1 bis 4, **dadurch gekennzeichnet, dass** es einen Schritt des Imprägnierens der Biomasse mit einer Imprägnierlösung, die einen chemischen Katalysator enthält, durch Durchführen der Biomasse durch ein Lösungsbett oder durch Beregnen der Biomasse mit der Lösung auf einem Bandförderer (9') oder durch Durchlaufen der Biomasse in einem Rührreaktor umfasst.

6. Verfahren nach einem der Ansprüche 1 bis 4, **dadurch gekennzeichnet, dass** es einen Schritt des Imprägnierens der Biomasse mit einer Imprägnierlösung, die einen chemischen Katalysator enthält, durch Einleiten in einen Reaktor (9) mit der oder mindestens einer der Zuführeinrichtungen (6) umfasst.

7. Verfahren nach einem der vorhergehenden Ansprüche, **dadurch gekennzeichnet, dass** es einen Schritt der Behandlung der Biomasse durch Kochen umfasst, insbesondere in dem oder einem der Reaktoren (14), der mit einer Zuführeinrichtung (11) versehen ist.

8. Verfahren nach einem der vorhergehenden Ansprüche, wobei das Verfahren die folgenden Schritte umfasst:
a. Zubereiten einer zum Imprägnieren der Biomasse (5) bestimmten Imprägnierlösung (4), die einen chemischen Katalysator (2) enthält, der unter einem sauren Katalysator, einem basischen Katalysator und einem oxidierenden Katalysator gewählt ist, bevorzugt einen sauren Katalysator, in einem Zubereitungsbereich (3)
b. Einleiten der zerkleinerten Biomasse (5) durch einen Einlass eines Imprägnierreaktors (9) mithilfe einer ersten Zuführeinrichtung (6), wobei die erste Zuführeinrichtung durch Zirkulation einer ersten Reinigungsflüssigkeit (7, 8) zwischen einem Einlass und einem Auslass der Einrichtung (6) gereinigt wird
c. Einleiten der Lösung in den Imprägnierreaktor (9) durch einen ersten Lösungseinlass (4) des Reaktors
d. Transferieren der imprägnierten und abgetropften Biomasse (10) von einem Auslass des Imprägnierreaktors zu einem Einlass eines Reaktors (14) zur Vorbehandlung durch Kochen, wobei das Einleiten in den Vorbehandlungsreaktor mit einer zweiten Zuführeinrichtung (11) erfolgt, wobei die zweite Zuführeinrichtung durch Zirkulation einer zweiten Reinigungsflüssigkeit (12, 13) zwischen einem Einlass und einem Auslass der Zuführeinrichtung gereinigt wird
e. Vorbehandlung der Biomasse (10) in dem Reaktor durch Dampfexplosion (14)
f. Wiedereinleiten mindestens eines Teils der ersten und/oder der zweiten aus dem Flüssigkeitsauslass der ersten oder der zweiten Zuführeinrichtung (6, 11) austretenden Reinigungsflüssigkeit in den Reinigungseinlass der ersten Zuführeinrichtung (6) oder der zweiten Zuführeinrichtung (11).

9. Verfahren nach dem vorhergehenden Anspruch, **dadurch gekennzeichnet, dass** es ferner umfasst:
g. Wiedereinleiten eines Teils der ersten und/oder der zweiten aus dem Flüssigkeitsauslass der ersten oder der zweiten Zuführeinrichtung (6, 11) austretenden Reinigungsflüssigkeit in den Zubereitungsbereich (3) der Imprägnierlösung im Hinblick auf die Zubereitung a.) der Lösung.

10. Verfahren nach einem der vorhergehenden Ansprüche, **dadurch gekennzeichnet, dass** die und/oder mindestens eine der Zuführeinrichtungen eine, insbesondere mindestens teilweise konische, Zuführschnecke (6, 11) ist, die eine mit einem Gitter versehene Verkleidung umfasst, welche die Zirkulation der Reinigungsflüssigkeit und gegebenenfalls das Extrahieren von Flüssigkeit aus der Biomasse ermöglicht.

11. Verfahren nach Anspruch 7 oder 8, **dadurch gekennzeichnet, dass** ein Teil der ersten Reinigungsflüssigkeit (8) am Reinigungsauslass der ersten Zuführeinrichtung (6) wieder in den Reinigungseinlass (8b, 8d) der ersten oder der zweiten Zuführeinrichtung eingeleitet wird und dass ein anderer Teil der Reinigungsflüssigkeit wieder in den Zubereitungsbereich (3) der Lösung im Hinblick auf deren Zubereitung eingeleitet (8c) wird.

12. Verfahren nach Anspruch 7 oder 8, **dadurch gekennzeichnet, dass** ein Teil der zweiten Reinigungsflüssigkeit (13) am Reinigungsauslass der zweiten Zuführeinrichtung (11) wieder in den Reinigungseinlass der ersten oder der zweiten Zuführeinrichtung (6, 11) eingeleitet (13b, 13d) wird und dass ein anderer Teil (13c) der Reinigungsflüssigkeit wieder in den Zubereitungsbereich (3) der Lösung im Hinblick auf deren Zubereitung eingeleitet wird.

13. Verfahren nach einem der vorhergehenden Ansprüche, **dadurch gekennzeichnet, dass** das Reinigen der Zuführeinrichtung (11) in Gegenwart von Biomasse erfolgt, der ein Katalysator zugesetzt wurde, insbesondere ein saurer, basischer oder oxidierender Katalysator, dass die aus dem Flüssigkeitsauslass der Zuführeinrichtung (6, 11) austretende Reinigungsflüssigkeit einen gewissen Gehalt des Katalysators enthält, wenn die Biomasse beim Durchtreten durch die Zuführeinrichtung eine Flüssigkeitsextraktion erfährt, und dass die diesen Katalysator enthaltende Reinigungsflüssigkeit mindestens teilweise wieder in den Reinigungseinlass derselben Zuführeinrichtung oder einer anderen der Zuführeinrichtungen eingeleitet wird, die insbesondere Biomasse ohne Katalysator fördert.

14. Anlage zur Umsetzung des Verfahrens nach einem der vorhergehenden Ansprüche, **dadurch gekennzeichnet, dass** sie mindestens einen Reaktor zur Behandlung einer lignocellulosehaltigen Biomasse, die einen Trockenmassegehalt von höchstens 90 Gew.-% aufweist, umfasst, mit einer Zuführung von Biomasse zu dem oder mindestens einem der Reaktoren mit einer Zuführeinrichtung, die einen Druckanstieg zwischen dem Biomasseeinlass und dem Biomasseauslass der Zuführeinrichtung erzeugt, mit Reinigung der Zuführeinrichtung durch Zirkulation einer Reinigungsflüssigkeit zwischen einem Reinigungseinlass und einem Reinigungsauslass, und einer Einrichtung zum Wiedereinleiten mindestens eines Teils der aus dem Flüssigkeitsauslass der oder mindestens einer der Zuführeinrichtungen (6, 11) austretenden Reinigungsflüssigkeit (8, 13) in den Reinigungseinlass derselben Zuführeinrichtung oder einer anderen der Zuführeinrichtungen.

15. Anlage zur Behandlung einer lignocellulosehaltigen Biomasse, umfassend:
- einen Zubereitungsbereich (3) zum Zubereiten einer zum Imprägnieren der Biomasse (5) bestimmten Imprägnierlösung (4), die einen chemischen Katalysator enthält, der unter einem sauren, basischen oder oxidierenden Katalysator gewählt ist, bevorzugt einen sauren Katalysator, wobei der Bereich mit einem Flüssigkeitsauslass versehen ist
- einen Imprägnierreaktor (9), wobei der Reaktor mit einem Einlass und einem Auslass für Biomasse versehen ist
- eine erste Zuführeinrichtung zum Zuführen von zerkleinerter Biomasse (6) zum Imprägnierreaktor (9) durch den Biomasseeinlass des Imprägnierreaktors,
- eine Zuführeinrichtung zum Zuführen von Imprägnierlösung (4a) zum Reaktor (5), die einen Lösungsauslass des Zubereitungsbereichs (3) der Lösung (4) mit einem ersten Lösungseinlass im Imprägnierreaktor verbindet,
- einen Vorbehandlungsreaktor (14) zur Vorbehandlung der imprägnierten Biomasse (10) durch Kochen, bei dem ein Biomasseeinlass mit dem Biomasseauslass des Imprägnierreaktors (9) verbunden ist
- eine zweite Zuführeinrichtung (11) zum Zuführen von imprägnierter Biomasse (10) zum Vorbehandlungsreaktor durch den Biomasseeinlass des Vorbehandlungsreaktors (14)
- eine Reinigungsflüssigkeitszirkulation (7, 8) zwischen einem Einlass und einem Auslass der ersten Zuführeinrichtung (6) zum Zuführen von zerkleinerter Biomasse (5) zum Imprägnierreaktor (9)
- eine Reinigungsflüssigkeitszirkulation (12, 13) zwischen einem Einlass und einem Auslass der zweiten Zuführeinrichtung (11) zum Zuführen von imprägnierter Biomasse (10) zum Vorbehandlungsreaktor (14)
**dadurch gekennzeichnet, dass** die Anlage ferner umfasst
- eine Einrichtung zum Wiedereinleiten mindestens eines Teils der ersten und/oder der zweiten aus dem Flüssigkeitsauslass der ersten oder der zweiten Zuführeinrichtung (6, 11) austretenden Reinigungsflüssigkeit in den Reinigungseinlass der ersten Zuführeinrichtung und/oder der zweiten Zuführeinrichtung.

16. Verwendung des Verfahrens oder der Anlage nach einem der vorhergehenden Ansprüche zur Behandlung von lignocellulosehaltigen Biomassen (5) wie Holz, Stroh, landwirtschaftliche Reststoffe und dedizierte Energiepflanzen, insbesondere ein- oder mehrjährige Pflanzen wie Miscanthus zur Erzeugung von Zucker, Biokraftstoffen oder biobasierten Molekülen.

## Claims

1. A process for treating a lignocellulosic biomass comprising a solids content of not more than 90% by weight, said process comprising the use of at least one reactor for treating said biomass (9,14), in which the or at least one of said reactors is fed with biomass via a feed means (6,11) creating a pressure increase between the biomass inlet and the biomass outlet of said feed means, in which said feed means is washed by circulation of a washing fluid between a washing inlet (7,12) and a washing outlet (8,13), **characterized in that** at least a portion of the washing fluid exiting the fluid outlet of the or of at least one of the feed means (6,11) is reintroduced into the washing inlet of the same feed means or of another of said feed means.

2. The process as claimed in the preceding claim, **characterized in that** liquid is extracted from the biomass during its passage through the or one of the feed means (6,11).

3. The process as claimed in either of the preceding claims, **characterized in that** the pressure increase created in the or at least one of the feed means (6,11) is at least 0.05 MPa, notably between 0.05 and 4 MPa.

4. The process as claimed in one of the preceding claims, **characterized in that** it comprises a step of impregnating the biomass with an impregnation liquor containing a chemical catalyst, which is performed by introducing the biomass into the/one of the reactors (9,1) equipped with the feed means (6,11).

5. The process as claimed in one of claims 1 to 4, **characterized in that** it comprises a step of impregnating the biomass with an impregnation liquor containing a chemical catalyst by passing the biomass through a bed of liquor or by spraying the biomass with the liquor on a conveyor of belt type (9') or by passing the biomass through a stirred reactor.

6. The process as claimed in one of claims 1 to 4, **characterized in that** it comprises a step of impregnating the biomass with an impregnation liquor containing a chemical catalyst, by introduction into a reactor (9) via said or at least one of said feed means (6).

7. The process as claimed in one of the preceding claims, **characterized in that** it comprises a step of treating the biomass by cooking, notably in the or one of the reactors (14) equipped with a feed means (11).

8. The process as claimed in one of the preceding claims, said process comprising the following steps:
a. Preparing an impregnation liquor (4) containing a chemical catalyst (2) intended for the impregnation of the biomass (5), chosen from an acid catalyst, a basic catalyst and an oxidizing catalyst, and preferably an acid catalyst, in a preparation zone (3)
b. Introducing the milled biomass (5) via an inlet of an impregnation reactor (9) by means of a first feed means (6), said first feed means being washed by circulation of a first washing fluid (7,8) between an inlet and an outlet of said means (6)
c. Introducing the liquor into the impregnation reactor (9) via a first liquor (4) inlet of the reactor
d. Transferring the impregnated and drained biomass (10) from an impregnation reactor outlet to an inlet of a cooking pretreatment reactor (14), the introduction into said pretreatment reactor taking place via a second feed means (11), said second feed means being washed by circulation of a second washing fluid (12,13) between an inlet and an outlet of said feed means
e. Pretreating said biomass (10) in said steam explosion reactor (14)
f. Reintroducing at least a portion of the first and/or of the second washing fluid leaving the fluid outlet of said first or of said second feed means (6,11) into the washing inlet of the first feed means (6) and/or of the second feed means (11).

9. The process as claimed in the preceding claim, **characterized in that** it also comprises:
g. Reintroducing a portion of the first and/or of the second washing fluid leaving the fluid outlet of the first or of the second feed means (6,11) into the impregnation liquor preparation zone (3) for the purpose of preparing a.) said liquor.

10. The process as claimed in one of the preceding claims, **characterized in that** the and/or at least one of the feed means is a feed screw (6,11), which is notably at least partly conical, comprising a cowling equipped with a grate allowing the circulation of the washing fluid and optionally the extraction of fluid from the biomass.

11. The process as claimed in claim 7 or 8, **characterized in that** a portion of the first washing fluid (8) at the washing outlet of the first feed means (6) is reintroduced into the washing inlet (8b,8d) of the first or of the second feed means, and **in that** another portion of said washing fluid is reintroduced (8c) into the liquor preparation zone (3) for the purpose of preparing same.

12. The process as claimed in claim 7 or 8, **characterized in that** a portion of the second washing fluid (13) at the washing outlet of the second feed means (11) is reintroduced (13b, 13d) into the washing inlet of the first or of the second feed means (6,11), and **in that** another portion (13c) of said washing fluid is reintroduced into the liquor preparation zone (3) for the purpose of preparing same.

13. The process as claimed in one of the preceding claims, **characterized in that** the washing of the feed means (11) is performed in the presence of biomass supplemented with a catalyst, notably an acid, basic or oxidizing catalyst, **in that** the washing fluid leaving the fluid outlet of said feed means (6,11) contains a certain content of said catalyst when the biomass undergoes a liquid extraction by passing through said feed means, and **in that** said washing fluid containing this catalyst is at least partly reintroduced into the washing inlet of the same feed means or of another of said feed means, notably conveying biomass free of catalyst.

14. A facility performing the process as claimed in one of the preceding claims, **characterized in that** it comprises at least one reactor for treating a lignocellulosic biomass having a solids content of not more than 90% by weight with feeding of the or of at least one of said reactors with biomass via a feed means creating a pressure increase between the biomass inlet and the biomass outlet of said feed means, with washing of said feed means by circulation of a washing fluid between a washing inlet and a washing outlet, and a means for reintroducing at least a portion of the washing fluid (8,13) exiting the fluid outlet of the or of at least one of the feed means (6,11) into the washing inlet of the same feed means or of another of said feed means.

15. A facility for treating a lignocellulosic biomass, comprising:
- A zone (3) for preparing an impregnation liquor (4) containing a chemical catalyst for the impregnation of the biomass (5), chosen from an acid, basic or oxidizing catalyst, and preferably an acid catalyst, and equipped with a liquor outlet
- An impregnation reactor (9), said reactor being equipped with a biomass inlet and outlet
- A first means (6) for feeding milled biomass to the impregnation reactor (9) via the biomass inlet of the impregnation reactor
- A means for feeding impregnation liquor (4a) to the reactor (5) connecting a liquor outlet of the liquor (4) preparation zone (3) to a first liquor inlet in the impregnation reactor
- A reactor (14) for pretreatment of the impregnated biomass (10) by cooking, a biomass inlet of which is connected to the biomass outlet of the impregnation reactor (9)
- A second means (11) for feeding impregnated biomass (10) to the pretreatment reactor via the biomass inlet of said pretreatment reactor (14)
- A circulation of washing fluid (7,8) between an inlet and an outlet of the first milled biomass (5) feed means (6) of the impregnation reactor (9)
- A circulation of washing fluid (12,13) between an inlet and an outlet of the second impregnated biomass (10) feed means (11) of the pretreatment reactor (14)
**characterized in that** the facility also comprises
- A means for reintroducing at least a portion of the first and/or of the second washing fluid leaving the fluid outlet of said first or of said second feed means (6,11) into the washing inlet of the first feed means and/or of the second feed means.

16. The use of the process or of the facility as claimed in one of the preceding claims, for the treatment of lignocellulosic biomass (5) such as wood, straw, agricultural residues, and all dedicated energy crops, notably annual or perennial plants such as miscanthus, in order to produce sugars, biofuels or biobased molecules.
